Europäisches Patentamt

European Patent Office

Office européen des brevets

(19)

(11) EP 0 527 083 B1

## (12) FASCICULE DE BREVET EUROPEEN

(45) Date de publication et mention
de la délivrance du brevet:
**23.10.1996 Bulletin 1996/43**

(51) Int. Cl.$^6$: **C01B 11/06**

(21) Numéro de dépôt: **92402221.3**

(22) Date de dépôt: **03.08.1992**

(54) **Procédé de préparation de solutions concentrées d'hypochlorite de métal alcalin**

Verfahren zur Herstellung von konzentrierten Alkalimetallhypochloritlösungen

Process for preparing concentrated solutions of alkali metal hypochlorites

(84) Etats contractants désignés:
**AT BE CH DE DK ES FR GB GR IE IT LI LU MC NL PT SE**

(30) Priorité: **06.08.1991 FR 9109999**

(43) Date de publication de la demande:
**10.02.1993 Bulletin 1993/06**

(73) Titulaire: **ELF ATOCHEM S.A.**
**92800 Puteaux (FR)**

(72) Inventeurs:
- **Nesty, Patrick**
 **F-38560 Jarrie (FR)**
- **Dugua, Jacques**
 **F-38560 Jarrie (FR)**
- **Thery, Philippe**
 **F-38640 Claix (FR)**

(56) Documents cités:
**EP-A- 0 054 996**    **BE-A- 640 874**
**FR-A- 2 532 291**

## Description

La présente invention concerne un procédé de préparation de solutions concentrées d'hypochlorite de métal alcalin. L'invention est particulièrement utilisée pour préparer la javel concentrée pouvant avoir une teneur supérieure à 100° chlorométriques et sous-saturée en NaCl. La préparation de la javel se fait par la réaction du chlore sur une solution de soude et produit autant de môles d'hypochlorite que de chlorure de sodium. Au-delà d'une certaine concentration une partie du NaCl précipite. Lors de la fabrication de javel concentrée, le NaCl est toujours en saturation. Les solutions n'étant pas stables dans le temps, des cristaux de NaCl se forment en permanence suite aux réactions de décomposition. Ces cristaux de sel troublent la solution et se décomposent dans les capacités. De plus, pour certaines applications, la présence de sel est nuisible.

Dans le brevet FR 1352198 on a proposé de préparer des solutions de javel concentrées puis de les diluer pour obtenir des solutions plus stables. Dans ce brevet on a aussi décrit un appareillage pour produire cette javel concentrée, constitué d'une colonne verticale cylindrique, la base étant conique, et d'un circuit de recyclage extérieur avec une pompe et un échangeur. On soutire la production de javel en haut de la colonne, on extrait la javel en partie haute de la colonne par le circuit de recyclage. Après passage dans la pompe et dans l'échangeur la solution de javel est recyclée à la base de la colonne à base conique. A la base de la colonne on introduit le chlore et la soude et on soutire une suspension de cristaux de NaCl dans la solution de javel. On ajuste la vitesse du fluide dans la colonne pour maintenir la suspension de cristaux de NaCl à l'état fluidisé et telle que la précipitation du NaCl se fait essentiellement par grossissement des cristaux. Les gros grains descendent à la base de la colonne dans la partie conique et il est donc facile de les soutirer. Pour éviter la formation de fines en quantité notable, il suffit que le lit fluide occupe l'ensemble du volume réactionnel. Si le lit fluide n'est pas suffisamment expansé on fait des fines difficiles à séparer, si le lit fluide est trop expansé des cristaux de NaCl partent avec la production d'eau de javel. Il est aussi nécessaire pour démarrer d'introduire une suspension de cristaux de chlorure de sodium d'une granulométrie convenablement choisie au départ.

L'art antérieur a aussi proposé dans le brevet US-A-4,428,918 une colonne verticale avec une recirculation extérieure par une pompe à travers un échangeur. On extrait la javel en partie haute de la colonne par le circuit de recyclage. Après passage dans la pompe et dans l'échangeur la javel est recyclée à la base de la colonne. A la base de cette colonne on injecte aussi la soude et le chlore mais à la différence de l'art antérieur précédent, il est disposé dans cette colonne une cheminée qui permet une circulation intérieure du type gazosiphon sous l'effet du débit de chlore en plus de la circulation provoquée par la pompe de recyclage extérieure. En partie haute de la colonne, on soutire la production d'eau de javel qu'il faut filtrer pour enlever les cristaux de NaCl et obtenir ainsi la javel concentrée. En effet, au contraire de l'art antérieur FR-A-1352198, il y a complète agitation de toute la colonne qui contient donc une suspension de cristaux de NaCl dans la javel concentrée. La filtration est très difficile parce que les cristaux ne sont pas assez gros et en plus sont de taille très variable.

On a aussi proposé dans le brevet US-A-4,780,303 un procédé continu en deux étapes dans deux appareillages séparés. Dans la première étape on s'arrête à une concentration de NaClO telle que le NaCl ne précipite pas, puis dans une deuxième étape, on rajoute du chlore et de la soude, les cristaux de NaCl précipitent et on récupère dans la partie haute de la colonne la javel concentrée. Les cristaux de NaCl sont purgés à la base de la colonne de cette deuxième étape. Ce procédé permet effectivement de produire en continu de la javel concentrée ne contenant plus de cristaux. Par contre ce procédé est couteux en investissement et aussi en entretien puisqu'il y a deux dispositifs de réaction chacun équipé d'une pompe et d'un échangeur.

On a maintenant trouvé un procédé beaucoup plus simple pour préparer des solution concentrées d'hypochlorite de métal alcalin. L'invention est un procédé de préparation d'une solution concentrée d'un hypochlorite de métal alcalin par réaction du chlore et d'une solution d'hydroxyde du métal alcalin correspondant en présence de cristaux de chlorure de métal alcalin qui consiste à introduire le chlore et la solution d'hydroxide en bas d'un récipient cylindrique vertical à base cônique contenant une suspension de cristaux de métal alcalin, caractérisé en ce que dans un récipient constitué par une simple colonne verticale à base cônique surmontée d'une autre colonne verticale de section supérieure, lesdites colonnes étant reliées entre elles par un tronc de cône :

a) on injecte dans la partie basse du chlore et une solution d'hydroxyde de métal alcalin,
b) dans la partie haute, on prélève la solution d'hypochlorite, dont (i) une partie constitue la production de la solution concentrée d'hypochlorite, et (ii) l'autre partie est recyclée dans la partie basse du récipient,
c) on purge les cristaux de chlorure de métal alcalin près de l'extrémité inférieure de la partie basse du récipient,
d) on ajuste le recyclage et l'injection des réactifs de l'étape a) de telle sorte que les cristaux de chlorure de métal alcalin sont fluidisés essentiellement dans la partie basse du récipient.

On peut utiliser du chlore pur liquide ou gazeux ou un gaz contenant du chlore et inerte pour la réaction ; par exemple de l'air ou de l'azote chargés en chlore. La concentration de la solution d'hydroxyde est choisie en fonction de la concentration de la solution d'hypochlorite qu'on veut préparer. On peut aussi utiliser une solution concentrée d'hydroxyde et ajouter de l'eau. La réaction est totale et stoechiométrique. On peut opérer à toute pression mais il est beaucoup plus simple d'opérer à la pression atmosphérique. Le récipient peut être ouvert mais on préfère le fermer et le relier à un système d'absorption pour être sûr en cas d'incident de ne pas laisser échapper du chlore dans l'atmosphère bien qu'on opère toujours avec un léger excédent d'hydroxyde. La température de la solution à l'intérieur du récipient et dans le circuit de recyclage est maintenue en dessous de 35° C pour éviter la formation de chlorate. On peut disposer un échangeur de chaleur de préférence sur le circuit de recyclage ou disposer un échangeur dans le récipient, ou utiliser un récipient à double enveloppe avec circulation d'un fluide à basse température ou toute combinaison de ces moyens.

Le récipient est une simple colonne surmontée d'une autre colonne de diamètre plus grand, la liaison se faisant par un tronc de cône. Le rapport de la section de la partie haute à la section de la partie basse doit être suffisant pour que les cristaux fluidisés restent en majorité dans la partie basse et que si la fluidisation était trop forte ils puissent décanter dans la partie haute et redescendre dans la partie basse. On obtient ainsi un grossissement des cristaux de chlorure du métal alcalin, la précipitation du chlorure se faisant sur les cristaux existants. Il se forme évidemment aussi de nouveaux petits cristaux, qui sont dans tout le récipient et qui circulent avec le recyclage. Avantageusement le rapport des sections est supérieur à 1,2 et peut être compris entre 2 et 12. Le volume de la partie basse peut représenter au moins 30 % du volume total du récipient et de préférence 40 à 60 %. Le volume de la partie basse est déterminé comme dans l'art antérieur par la réaction du chlore sur l'hydroxyde de métal alcalin.

La partie de l'hypochlorite prélevée à l'étape b) et qui constitue la production peut ensuite être filtrée ou légèrement diluée pour faire disparaître les petits cristaux de chlorure de métal alcalin. C'est en effet l'avantage du procédé de l'invention de pouvoir produire facilement une solution très concentrée d'hypochlorite qu'on peut donc diluer légèrement pour la débarrasser complètement des moindres cristaux de chlorure. L'avantage du procédé est qu'il produit une solution concentrée d'hypochlorite pratiquement exempte de cristaux. Une légère dilution fait alors disparaître les derniers cristaux de NaCl, mais permet surtout d'avoir une solution concentrée non saturée en chlorure alcalin. Cette réserve de solubilité empêche la réapparition de cristaux de sel avant l'utilisation du produit. On peut ainsi produire un hypochlorite à 27 % de chlore actif qu'on dilue jusqu'à 25 % de chlore actif. Pour mémoire la conversion des degrés chlorométriques en % Cl$_2$ actif est :

$$\% \; Cl2 \; actif = \frac{degré \; chloro \; x \; 3,17 \; g/l \; x \; 100}{densité \; (g/l)}$$

| Degré chlorométrique | Densité | % chlore actif |
|---|---|---|
| 115 | 1 335 | 27,3 |
| 100 | 1 315 | 24,1 |

Un autre avantage de ce procédé sur le plan industriel est qu'il ne nécessite pas d'apport de cristaux de chlorure alcalin pour amorcer la cristallisation dans les phases de démarrage. Les particules fines piégées dans le réacteur, grossissent progressivement et forment le lit fluide.

Selon une forme préférée de l'invention, on effectue l'étape b) en soutirant la production de la solution concentrée d'hypochlorite à l'extrémité supérieure de la partie haute et on prélève la solution d'hypochlorite pour le recyclage à un point situé dans la partie haute mais en dessous du soutirage. On peut aussi ajuster le recyclage et l'injection des réactifs de telle sorte que les petits cristaux de chlorure normalement présents dans la partie haute montent jusqu'au point où on prélève le recyclage mais ne montent pas jusqu'à l'extrémité supérieure de la partie haute. L'homme de l'art peut facilement déterminer cette hauteur séparant l'extrémité supérieure de la partie haute et le point de prélèvement du recyclage. On a trouvé qu'il suffit de se placer à mi-hauteur de la partie haute du récipient.

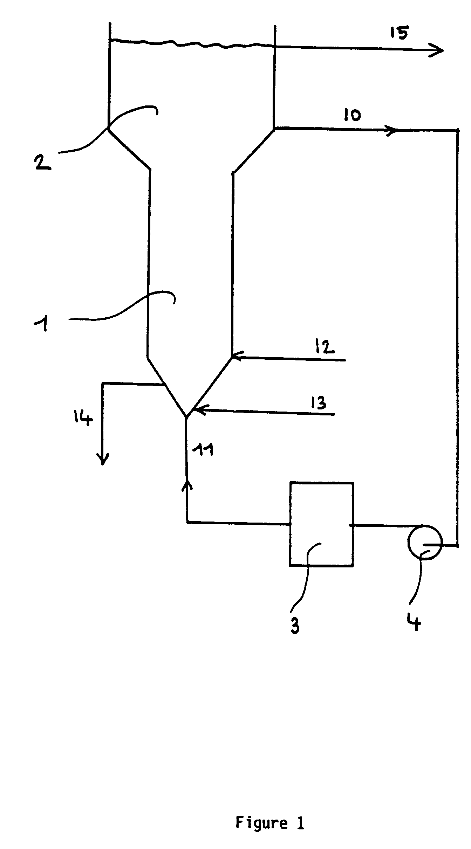

La figure 1 décrit un mode de réalisation possible de la présente invention. 1 et 2 représentent respectivement la partie basse et la partie haute du récipient. On soutire en 15 la production d'hypochlorite concentrée, on prélève en 10 la solution d'hypochlorite pour le recyclage vers la pompe 4 et qui retourne en 11 dans la partie basse 1 après passage dans l'échangeur 3. On injecte la solution d'hydroxyde de métal alcalin par la tubulure 13 et le chlore par la tubulure 12. Par la tubulure 14 on extrait le chlorure de métal alcalin.

La présente invention concerne aussi un appareillage pour la mise en oeuvre du procédé de l'invention. Cet appareillage est constitué d'un récipient essentiellement vertical dont la partie basse a une section inférieure à la section de sa partie haute et ayant :

- en partie basse des tubulures pour le recyclage, l'injection des réactifs et le soutirage du chlorure de métal alcalin,
- en partie haute une tubulure pour prélever la solution d'hypochlorite,
- une boucle de recyclage comprenant des moyens de circulation et éventuellement un échangeur de chaleur.

Selon une forme préférée de l'invention le récipient possède à l'extrémité supérieure de la partie haute une tubulure pour soutirer la production d'hypochlorite et dans la partie haute, de préférence à mi-hauteur de cette partie haute, une tubulure pour le recyclage.

Exemple :

Dans un dispositif selon la figure 1 de caractéristiques suivantes :

-   Le réacteur utilisé est constitué de trois parties :

    *   une partie inférieure conique (φ 1300, h = 1900) qui reçoit le retour de la boucle de refroidissement
    *   une partie intermédiaire cylindrique (φ 1300, h = 3500) qui constitue la zone de réaction et de fluidisation. Les réactifs sont injectés au pied de cette zone.
    *   une partie supérieure cylindro-conique (φ 3500, h = 1900) dite zone de décantation.

-   Le départ de la boucle de refroidissement est en bas de la partie cylindrique alors que la sortie du produit fini se fait dans la partie supérieure.
-   Volume du récipient 15 m$^3$
-   La partie basse représente 37 % du volume du récipient
-   Le rapport des sections est 7
-   Le débit de recyclage : 60 m$^3$/heure. L'échangeur refroidit de 30 à 20° C.

On injecte : 1270 kg/h de Na OH (soude 50 %) 1100 kg/h de chlore 97 % 1200 kg/h d'eau en amont de la pompe de recirculation
On produit : 3 m$^3$/h de solution d'hypochlorite de sodium à 27 % de Cl2 actif.

600 kg/h de cristaux NaCl.
Après le soutirage la javel est diluée de 27 à 25 % de chlore actif.

**Stabilité de la javel obtenue :**

-   La perte journalière moyenne sur 7 jours est de l'ordre de 0,35 % de chlore actif à 17° C.
    Les avantages de ce procédé sont :
-   Production d'une javel concentrée (> 24 % de chlore actif) exempte de cristaux de sel et surtout non saturée en sel.
-   Cette réserve de solubilité empêche la réapparition de cristaux avant l'utilisation du produit (la javel ne se trouble plus et il n'y a pas d'accumulations de cristaux de sel au fond des stockages ou dans les citernes des camions).
-   Possibilité d'utiliser un chlore non purifié : il est, par exemple, possible d'utiliser du chlore sortant directement d'une électrolyse sans que les gaz inertes qu'il contient ne gênent la maîtrise de la cristallisation du sel.

-   Il ne nécessite pas d'apport de cristaux de NaCl pour amorcer la cristallisation dans les phases de démarrage de l'installation.
    Les particules fines, sont réinjectées dans la zone de réaction.
    Les cristaux grossissent progressivement et forment le lit fluide.

**Revendications**

1.  Procédé de préparation d'une solution concentrée d'un hypochlorite de métal alcalin par réaction du chlore et d'une solution d'hydroxyde du métal alcalin correspondant en présence de cristaux de chlorure de métal alcalin qui consiste à introduire le chlore et la solution d'hydroxyde en bas d'un récipient cylindrique vertical à base cônique contenant une suspension de cristaux de métal alcalin, caractérisé en ce que dans un récipient constitué par une simple colonne verticale à base cônique surmontée d'une autre colonne verticale de section supérieure, lesdites colonnes étant reliées entre elles par un tronc de cône :

    a) on injecte dans la partie basse du chlore et une solution d'hydroxyde de métal alcalin,
    b) dans la partie haute on prélève la solution d'hypochlorite, (i) une partie constitue la production de la solution concentrée d'hypochlorite, (ii) l'autre partie est recyclée dans la partie basse du récipient,
    c) on purge les cristaux de chlorure de métal alcalin près de l'extrémité inférieure de la partie basse du récipient,
    d) on ajuste le recyclage et l'injection des réactifs de l'étape a) de telle sorte que les cristaux de chlorure de métal alcalin sont fluidisés essentiellement dans la partie basse du récipient.

2.  Procédé selon la revendication 1 caractérisé en ce que le rapport de la section de la partie haute du récipient à la section de la partie basse est supérieure à 1,2 et de préférence compris entre 2 et 12.

3.  Procédé selon la revendication 1 ou 2 caractérisé en ce que le volume de la partie basse représente au moins 30 % du volume total du récipient et de préférence 40 à 60 %.

4.  Procédé selon l'une des revendications 1 à 3 caractérisé en ce que on effectue l'étape b) en soutirant la production de la solution concentrée d'hypochlorite à l'extrémité supérieure de la partie haute et qu'on prélève la solution d'hypochlorite pour le recyclage à un point situé dans la partie haute mais en-dessous du soutirage.

5. Procédé selon la revendication 4 caractérisé en ce que le prélèvement pour le recyclage s'effectue à mi-hauteur de la section haute.

## Claims

1. Process for the preparation of a concentrated solution of an alkali metal hypochlorite by reaction of chlorine and of a solution of the corresponding alkali metal hydroxide in the presence of alkali metal chloride crystals which consists in introducing the chlorine and the hydroxide solution at the bottom of a vertical cylindrical receptacle with a conical base, containing a suspension of alkali metal crystals, characterized in that, in a receptacle consisting of a simple vertical column with a conical base surmounted by another vertical column of larger section, the said columns being connected together by a conical frustum:

   a) chlorine and an alkali metal hydroxide solution are injected into the bottom part,
   b) the hypochlorite solution is taken from the top part, (i) one part forms the output of the concentrated hypochlorite solution, (ii) the other part is recycled into the bottom part of the receptacle,
   c) the alkali metal chloride crystals are purged near the lower end of the bottom part of the receptacle,
   d) the recycling and the injection of the reactants from stage a) are adjusted so that the alkali metal chloride crystals are fluidized essentially in the bottom part of the receptacle.

2. Process according to Claim 1, characterized in that the ratio of the section of the top part of the receptacle to the section of the bottom part is higher than 1.2 and preferably between 2 and 12.

3. Process according to Claim 1 or 2, characterized in that the volume of the bottom part represents at least 30 % of the total volume of the receptacle and preferably 40 to 60 %.

4. Process according to one of Claims 1 to 3, characterized in that stage b) is carried out by drawing off the output of the concentrated hypochlorite solution at the upper end of the top part and that the hypochlorite solution for recycling is taken at a point situated in the top part but below the draw-off.

5. Process according to Claim 4, characterized in that the withdrawal for the recycling takes place at mid-height of the top section.

## Patentansprüche

1. Verfahren zur Herstellung einer konzentrierten Lösung eines Alkalimetallhypochlorits durch Reaktion von Chlor und einer entsprechenden Alkalimetallhydroxidlösung in Gegenwart von Alkalimetallchloridkristallen, das darin besteht, das Chlor und die Hydroxidlösung am Fuße eines vertikalen zylindrischen Behältnisses mit konischem Sockel einzubringen, das eine Suspension von Alkalimetallkristallen enthält, dadurch gekennzeichnet, daß in einem Behältnis, das aus einer einfachen vertikalen Kolonne mit konischem Sockel besteht, auf die eine weitere vertikale Kolonne mit größerem Querschnitt gesetzt ist, wobei die Kolonnen untereinander mit einem konischen Schaft verbunden sind,

   a) man in den unteren Teil Chlor und eine Alkalimetallhydroxidlösung einspritzt,
   b) man in den oberen Teil die Hypochloritlösung entnimmt, (i) ein Teil stellt die hergestellte, konzentrierte Hypochloritlösung dar, (ii) der andere Teil wird dem unteren Teil des Behältnisses wieder zugeführt,
   c) man die Alkalimetallchloridkristalle zum unteren Ende des unteren Teils des Behältnisses abführt,
   d) man den Wiedereinsatz und das Einspritzen der Reagenzien aus Schritt a) so einstellt, daß die Alkalimetallchloridkristalle im wesentlichen im unteren Teil des Behältnisses fluidisiert werden.

2. Verfahren nach Anspruch 1, dadurch gekennzeichnet, daß das Verhältnis vom Querschnitt des oberen Teils des Behältnisses zum Querschnitt des unteren Teils größer als 1,2, vorzugsweise zwischen 2 und 12, ist.

3. Verfahren nach Anspruch 1 oder 2, dadurch gekennzeichnet, daß das Volumen des unteren Teils mindestens 30 % des Gesamtvolumens des Behältnisses, vorzugsweise 40 bis 60 %, darstellt.

4. Verfahren nach einem der Ansprüche 1 bis 3, dadurch gekennzeichnet, daß man Schritt b) durchführt, indem man die hergestellte konzentrierte Hypochloritlösung am oberen Ende des oberen Teils entnimmt und man die Hypochloritlösung zur Wiedereinsetzung an einer Stelle entnimmt, die im oberen Teil, jedoch unterhalb der erstgenannten Entnahmestelle gelegen ist.

5. Verfahren nach Anspruch 4, dadurch gekennzeichnet, daß die Entnahme für die Wiedereinsetzung auf mittlerer Höhe des oberen Abschnitts durchgeführt wird.

Figure 1